# EUROPEAN PATENT APPLICATION

(11) **EP 4 811 030 A1**
(43) Date of publication of application: **23.09.2026**
(21) Application number: 24905935.3
(22) Date of filing: 13.11.2024
(51) Int. Cl.: G03B 13/32

(54) **DRIVING MODULE, CAMERA MODULE, AND ELECTRONIC DEVICE**

(30) Priority: 22.12.2023 CN 202311795816
(71) Applicant: Huawei Technologies Co., Ltd., Shenzhen, Guangdong 518129 (CN)
(72) Inventor: ZHENG, Lichang, Shenzhen, Guangdong 518129 (CN); DING, Xiaoheng, Shenzhen, Guangdong 518129 (CN); WU, Yushun, Shenzhen, Guangdong 518129 (CN); GUO, Xiuqing, Shenzhen, Guangdong 518129 (CN); KUO, Li-Te, Shenzhen, Guangdong 518129 (CN); QIN, Zhenkai, Shenzhen, Guangdong 518129 (CN)
(74) Representative: Pfenning, Meinig & Partner mbB
(86) International application number: PCT/CN2024/131747
(87) International publication number: WO 2025/130449

(57) **Abstract**

Disclosed are a drive module, a camera module (110), and an electronic device (100). The drive module includes a fixed member (310), a movable member (320), a harmonic oscillator (340), and a driven member (330). The fixed member (310) includes a first mounting hole (311). The movable member (320) is configured to carry an optical element and is disposed in the first mounting hole (311). The harmonic oscillator (340) is configured to drive the driven member (330) to reciprocate along a first direction relative to the fixed member (310). When the driven member (330) reciprocates along the first direction relative to the fixed member (310), the driven member (330) transmits movement of the driven member (330) along the first direction to the movable member (320) via a transmission structure (322), to drive the movable member (320) to reciprocate along the first direction. Movement stability of the movable member (320) can be improved.

## Description

This application claims priority to Chinese Patent Application No. 202311795816.3, filed with the China National Intellectual Property Administration on December 22, 2023 and entitled "DRIVE MODULE, CAMERA MODULE, AND ELECTRONIC DEVICE", which is incorporated herein by reference in its entirety.

### TECHNICAL FIELD

This application relates to the field of electronic technologies, and more specifically, to a drive module, a camera module, and an electronic device.

### BACKGROUND

With continuous development of electronic device technologies, a photographing function has become an indispensable function of an electronic device (for example, a mobile phone or a tablet computer).

To meet long-stroke driving requirements, piezoelectric-driven motors are used in camera modules. Piezoelectric driving achieves energy transfer via high-frequency vibration of a vibrating body and preloaded friction between the vibrating body and a contact object (for example, a movable member in the camera module), thereby causing the contact object to implement linear or rotary motion.

However, a preload force is involved in a force system of the movable member in the camera module, an asymmetric and full-stroke unstable preload force may result in sticking or tilting of the movable member during movement.

### SUMMARY

This application provides a drive module, a camera module, and an electronic device, which can improve movement stability of a movable member in the camera module.

According to a first aspect, a drive module is provided, including: a fixed member, a movable member, a harmonic oscillator, and a driven member. The fixed member includes a first mounting hole. The movable member is configured to carry an optical element and is disposed in the first mounting hole. A preload member is configured to cooperate with the harmonic oscillator, to drive the driven member to reciprocate along a first direction relative to the fixed member. When the driven member reciprocates along the first direction relative to the fixed member, the driven member transmits movement of the driven member along the first direction to the movable member via a transmission structure, to drive the movable member to reciprocate along the first direction.

In this embodiment, because a preload force of the harmonic oscillator is applied to the driven member rather than acting directly on the movable member, the movable member is driven by the driven member to move along the first direction, and the driven member transmits only the movement of the driven member along the first direction via the transmission structure. Therefore, when the driven member experiences some disturbance in another direction due to an uneven preload force or environmental vibration, movement of the movable member is hardly affected, allowing the movable member to consistently move along the first direction, and resulting in more stable movement of the movable member. Because the optical element carried by the movable member has a high requirement for fine control of movement, the technical solution provided in this embodiment of this application can enable the movable member carrying the optical element to move more stably, thereby meeting a requirement for fine control of a position or a distance of the optical element.

With reference to the first aspect, in some implementations of the first aspect, the transmission structure includes a first limiting portion and a second limiting portion that are sequentially disposed along the first direction. The first limiting portion is disposed on the movable member, the second limiting portion is disposed on the driven member, the first limiting portion and the second limiting portion respectively include a first surface and a second surface that are opposite to each other, and a magnetic attraction force exists between the first limiting portion and the second limiting portion. When the driven member drives the movable member to reciprocate along the first direction, the first surface and the second surface are in contact with each other.

The first surface and the second surface may be planes perpendicular to the first direction. The two opposite surfaces, namely, the first surface and the second surface, of the first limiting portion and the second limiting portion may be in contact with each other due to the magnetic attraction force. When the driven member moves in a direction to separate the first surface and the second surface from each other, the two surfaces may still be in contact with each other under an action of magnetic attraction, so that the movable member is driven to move correspondingly by the magnetic attraction force. When the driven member moves in a direction to bring the first surface and the second surface toward each other, the driven member may push, via a pressure of the contacted surfaces of the two limiting portions, the movable member to move along the first direction.

With reference to the first aspect, in some implementations of the first aspect, the movable member is configured to move from a first position to a second position along the first direction under an action of a pop-out and push-back mechanism, so that the first surface of the first limiting portion and the second surface of the second limiting portion change from a separated state to a contact state, thereby enabling the transmission structure to transmit the movement of the driven member along the first direction to the movable member; or the movable member is configured to move from a second position to a first position along the first direction under an action of a pop-out and push-back mechanism, so that the first surface of the first limiting portion and the second surface of the second limiting portion change from a contact state to a separated state, thereby preventing the transmission structure from transmitting the movement of the driven member along the first direction to the movable member.

With reference to the first aspect, in some implementations of the first aspect, the pop-out and push-back mechanism includes a locking component and a pop-out component, the locking component is in contact with the movable member, and the pop-out component includes a first magnetic attraction assembly or a first elastic component. The locking component is configured to move from a third position to a fourth position along the first direction, so that the movable member can move from the first position to the second position under an action of the pop-out component; or the locking component is configured to move from a fourth position to a third position along the first direction, so that the movable member can move from the second position to the first position along the first direction under an action of the pop-out component.

The first elastic component may be an elastic component like a spring or a leaf spring, and the first elastic component may be in a preloaded state. In an initial state, the two limiting portions may be separated along the first direction. When fine control over a position of the movable member is required, the elastic component may be released by a locking apparatus, so that the movable member moves toward the driven member along the first direction. Therefore, the first surface and the second surface of the two limiting portions change from the separated state to the contact state. Subsequently, the position of the movable member may be finely controlled by controlling the harmonic oscillator.

In this embodiment of this application, only one end of the first elastic component may be fixed, and the other end of the first elastic component is a free end. In addition, after the release causes the first surface and the second surface on the movable member and the driven member to be in contact, the first elastic component is in a non-preloaded free state, so that subsequent movement, driven by the driven member, of the movable member is not affected by the first elastic component.

The first magnetic attraction assembly may be at least one pair of magnetic attraction members disposed on the movable member and the fixed member. When the locking apparatus moves, the movable member may move along with the locking apparatus under an action of the first magnetic attraction assembly, so that the movable member is separated from or in contact with the driven member.

Alternatively, the pop-out and push-back mechanism may include only a first magnetic attraction assembly. The first magnetic attraction assembly may be, for example, an electromagnet, and the fixed member and the movable member are each provided with one portion of the first magnetic attraction assembly correspondingly. When fine control over the position of the movable member is required, the electromagnet may be preloaded, so that the movable member moves along the first direction, and the two limiting portions change from the separated state to the contact state.

With reference to the first aspect, in some implementations of the first aspect, the drive module further includes a preload member. The preload member is configured to provide a preload force to the harmonic oscillator, and the harmonic oscillator is configured to drive, under an action of the preload force, the driven member to reciprocate along the first direction.

The preload member can provide the preload force required for the harmonic oscillator to generate a friction force.

In some implementations, the preload member may not be separately disposed, for example, the fixed member or the driven member is structurally designed, so that the fixed member or the driven member can provide a preload force to the harmonic oscillator.

With reference to the first aspect, in some implementations of the first aspect, the movable member reciprocates along the first direction via a first guide structure. The first guide structure includes a first guide shaft and a first groove that mates with the first guide shaft, and the first guide shaft and the first groove are respectively disposed on the fixed member and the movable member and extend along the first direction.

The first groove may be, for example, a V-shaped groove, or may be a groove of another shape, and is configured to guide a movement direction of the movable member.

The first guide structure may alternatively be a guide rail-and-sliding connector combination, a guide shaft-and-shaft sleeve combination, or a guide structure in any other form. The sliding connector may be a ball, a sliding block, or the like. This is not limited in this application.

With reference to the first aspect, in some implementations of the first aspect, the first guide structure includes a second guide shaft and a guide portion, and the second guide shaft and the guide portion are respectively disposed on the fixed member and the movable member and extend along the first direction.

Cooperation between the guide portion and the second guide shaft can prevent the movable member from rotating around the first guide shaft when moving along the first direction, so that the movable member can move more smoothly.

With reference to the first aspect, in some implementations of the first aspect, the drive module includes a second magnetic attraction assembly, and the second magnetic attraction assembly is configured to abut the first guide shaft against the first groove.

The second magnetic attraction assembly may enable the movable member to generate a shaft holding force with the first guide shaft during movement, so that the reciprocating motion of the movable portion along the first direction can always maintain a state of abutting the first guide shaft against the first groove, thereby implementing precise guidance along the first direction. When the drive module is subjected to an external force like a drop, although the movable member may temporarily generate an offset perpendicular to the first direction, the movable member can quickly return to an initial position due to the shaft holding force, so that reliability of the entire drive module is higher.

With reference to the first aspect, in some implementations of the first aspect, the driven member reciprocates along the first direction relative to the fixed member via a second guide structure. The second guide structure includes a first groove body provided on the driven member, a second groove body provided on the fixed member, and a sliding connector. The first groove body and the second groove body are provided opposite to each other and form an accommodation groove for accommodating the sliding connector, and the accommodation groove extends along the first direction.

The sliding connector may be a ball, or may be a sliding block. When the second guide structure is a ball, resistance of the driven member during movement can be reduced, so that the driven member moves more smoothly.

With reference to the first aspect, in some implementations of the first aspect, the sliding connector is a ball.

With reference to the first aspect, in some implementations of the first aspect, the drive module further includes a friction member. The harmonic oscillator is a stationary member, the friction member is a moving member, and when the harmonic oscillator vibrates, the driven member is driven, via a friction force between the harmonic oscillator and the friction member, to reciprocate along the first direction.

That the harmonic oscillator is a stationary member means that the harmonic oscillator does not move relative to the fixed member. The harmonic oscillator may be directly connected to the fixed member; or when a preload member is additionally disposed in the drive module and the preload member is also a stationary member, the harmonic oscillator may be fastened to the preload member, and the preload member is fastened to the fixed member.

When a preload member is additionally disposed in the drive module, the friction member may be disposed on the preload member or the driven member.

The friction member may be a separate component, and is fastened to the preload member or the driven member. The friction member may alternatively be a portion of the preload member or the driven member.

When the friction member is a separate component, the harmonic oscillator may directly drive the friction member to move: In an embodiment, the friction member may be directly connected to the driven member, to drive the driven member to move. In another embodiment, the friction member may be connected to the preload member, and the preload member may be connected to the driven member, so that the friction member may drive the driven member to move via the preload member. In this case, the preload member and the driven member may be integrated into one component. For example, the preload member may serve as the driven member to directly drive the movable member to move along the first direction.

When the friction member is portion of the preload member or the driven member: In an embodiment, the harmonic oscillator directly drives, via the friction member disposed on the driven member, the driven member to move. In another embodiment, the harmonic oscillator directly drives, via the friction member, the preload member to move, and the preload member is connected to the driven member, so that the driven member also moves along with the preload member.

With reference to the first aspect, in some implementations of the first aspect, the harmonic oscillator is a stationary member, the harmonic oscillator is fastened to the fixed member via the preload member, and the harmonic oscillator is configured to drive, via a friction force between the harmonic oscillator and the driven member, the driven member to reciprocate along the first direction.

With reference to the first aspect, in some implementations of the first aspect, the drive module further includes a friction member. The harmonic oscillator is a moving member, the friction member is fastened to the fixed member, and when the harmonic oscillator vibrates, the harmonic oscillator and the driven member are driven, via a friction force between the harmonic oscillator and the friction member, to reciprocate along the first direction.

That the harmonic oscillator drives the driven member to move along the first direction may mean that the harmonic oscillator is directly connected to the driven member and drives the driven member to move; or when the drive module includes a preload member, the harmonic oscillator is directly connected to the preload member, and the preload member is connected to the driven member, so that the harmonic oscillator can indirectly drive the driven member to move.

That the friction member is fastened to the fixed member may mean that the friction member is directly fastened to the fixed member. When a preload member is disposed on the drive module and the preload member is also a stationary member, the friction member may alternatively be directly fastened to the preload member, and the preload member is fastened to the fixed member.

With reference to the first aspect, in some implementations of the first aspect, the friction member is fastened to the fixed member, and the harmonic oscillator is fastened to the driven member.

With reference to the first aspect, in some implementations of the first aspect, the transmission structure includes a third limiting portion, a fourth limiting portion, a fifth limiting portion, and a second elastic component, the third limiting portion and the fourth limiting portion are disposed on the movable member, the fifth limiting portion is disposed on the driven member, the fifth limiting portion is located between the third limiting portion and the fourth limiting portion along the first direction, the third limiting portion and the fifth limiting portion respectively include a third surface and a fourth surface that are disposed opposite to each other, and the second elastic component is disposed between the fifth limiting portion and the fourth limiting portion.

The third surface and the fourth surface may be planes perpendicular to the first direction. When the movement of the driven member tends to bring the fifth limiting portion closer to the third limiting portion, the driven member may push, via the third surface and the fourth surface, the movable member to perform corresponding movement.

When the movement of the driven member tends to bring the fifth limiting portion closer to the fourth limiting portion, the driven member may push, via the second elastic component, the movable member to perform corresponding movement. The second elastic component may be an elastic component like a spring or a metal leaf spring. The second elastic component may be in a preloaded state. In this way, even if the driven member has only a small displacement, the movable member can perform a corresponding displacement without any hysteresis.

In some embodiments, one limiting portion may be disposed on the movable member, and two limiting portions may be disposed on the driven member. For details, refer to a case in which two limiting portions are disposed on the movable member, and one limiting portion is disposed on the driven member.

With reference to the first aspect, in some implementations of the first aspect, the transmission structure includes a third limiting portion, a fourth limiting portion, and a fifth limiting portion, the third limiting portion and the fourth limiting portion are disposed on the movable member, the fifth limiting portion is disposed on the driven member, the fifth limiting portion is located between the third limiting portion and the fourth limiting portion along the first direction, and the fifth limiting portion abuts against both the third limiting portion and the fourth limiting portion.

A length of the fifth limiting portion along the first direction may allow the fifth limiting portion to be in an interference fit state relative to a distance between the third limiting portion and the fourth limiting portion along the first direction. When the driven member moves differently along the first direction, the movable member may be pushed to move correspondingly through mutually contacting surfaces between the fifth limiting portion and the fourth limiting portion or through mutually contacting surfaces between the fifth limiting portion and the third limiting portion.

Because the three limiting portions are in an interference fit state, even if the driven member experiences a specific positional disturbance in a direction perpendicular to the first direction, a friction force between the fifth limiting portion and the third limiting portion or the fourth limiting portion remains small, which is sufficient to prevent the movable member from deviating from the first direction, so that the movable member moves more stably.

With reference to the first aspect, in some implementations of the first aspect, the transmission structure includes a third limiting portion, a fourth limiting portion, a fifth limiting portion, and a ball, the third limiting portion and the fourth limiting portion are disposed on the movable member, the fifth limiting portion is disposed on the driven member, the fifth limiting portion is located between the third limiting portion and the fourth limiting portion along the first direction, the third limiting portion and the fifth limiting portion respectively include a third surface and a fourth surface that are disposed opposite to each other, and the ball is disposed between the fifth limiting portion and the fourth limiting portion.

With reference to the first aspect, in some implementations of the first aspect, the movable member is configured to carry the optical element, and the optical element includes a lens, or the optical element includes a lens and an aperture stop.

With reference to the first aspect, in some implementations of the first aspect, the movable member is configured to carry the optical element, and the first direction is an axial direction of the first mounting hole.

The axial direction of the first mounting hole may be an optical axis direction of the optical element carried by the movable member.

The first direction is the optical axis direction of the optical element, enabling an operation like fine focus adjustment.

In some embodiments, the first direction may alternatively be a direction perpendicular to an optical axis of the optical element, to facilitate an operation like image stabilization.

According to a second aspect, a camera module is provided, including an optical element and the drive module according to any one of the first aspect or the implementations of the first aspect, where the movable member is configured to carry the optical element.

According to a third aspect, an electronic device is provided, including the drive module according to any one of the first aspect or the implementations of the first aspect or the camera module according to the second aspect.

### BRIEF DESCRIPTION OF DRAWINGS

FIG. 1 is a diagram of a structure of an electronic device to which an embodiment of this application is applicable;
FIG. 2 is a diagram of a structure of a camera module;
FIG. 3 is a diagram of a structure of a drive module according to an embodiment of this application;
FIG. 4A and FIG. 4B are sectional views of the drive module shown in FIG. 3 along a B-B cross section;
FIG. 5A to FIG. 5C are diagrams of a transmission structure according to an embodiment of this application;
FIG. 6 is a diagram of a structure of a harmonic oscillator according to an embodiment of this application;
FIG. 7 is a diagram of a structure of another harmonic oscillator according to an embodiment of this application;
FIG. 8A to FIG. 8D are diagrams of structures of connection relationships between a preload member, a harmonic oscillator, and a driven member according to an embodiment of this application;
FIG. 9A and FIG. 9B are diagrams of structures of connection relationships between a preload member, a harmonic oscillator, and a driven member according to an embodiment of this application; and
FIG. 10A to FIG. 10E are diagrams of a structure of a drive module according to an embodiment of this application.

### DESCRIPTION OF EMBODIMENTS

The following describes technical solutions of this application with reference to accompanying drawings. In the descriptions of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

Terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

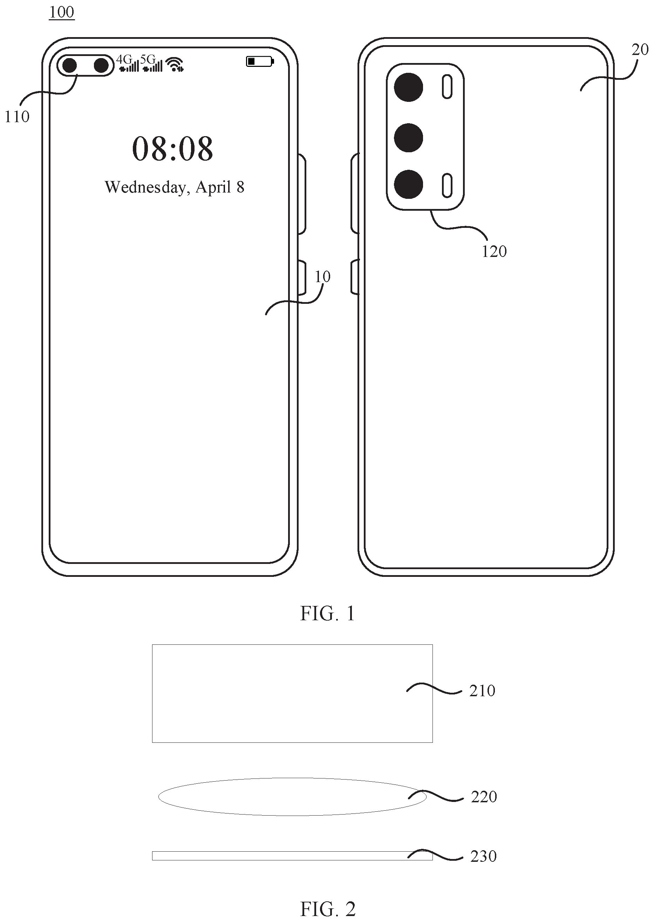

FIG. 1 is a diagram of a structure of an electronic device 100 to which an embodiment of this application is applicable. The electronic device 100 may be an electronic device having an image shooting or photographing function, for example, a mobile phone, a tablet computer, a television (or a smart screen), a laptop computer, a video camera, a video recorder, or a camera. For ease of understanding, an example in which the electronic device 100 is a mobile phone is used for description in this embodiment of this application.

The electronic device 100 may include a display 10 and a housing. The housing may include a frame and a rear cover 20. The frame may surround a periphery of the display 10, and the frame may surround a periphery of the rear cover 20. There may be a specific spacing between the display 10 and the rear cover 20. The display 10 may be disposed parallel to the rear cover 20.

A front-facing camera module (camera compact module, CCM) 110 may be disposed on the display 10 of the electronic device 100. As shown in the left figure in FIG. 1, the front-facing camera module 110 may be mounted on an upper left portion of the display 10. The front-facing camera module 110 may be, for example, configured to take a selfie.

A rear-facing camera module 120 may be disposed on the rear cover 20 of the electronic device 100. As shown in the right figure in FIG. 1, the rear-facing camera module 120 may be mounted on an upper left portion of the rear cover 20. The rear-facing camera module 120 may be, for example, configured to shoot a scene around the electronic device 100.

It should be understood that mounting positions of the front-facing camera module 110 and the rear-facing camera module 120 shown in FIG. 1 are merely examples. The mounting positions of the camera modules may not be limited in this application. In some other embodiments, the front-facing camera module 110 and the rear-facing camera module 120 may alternatively be mounted at other positions on the electronic device 100. For example, the front-facing camera module 110 may be mounted on a middle upper portion or right upper portion of the display 10. For another example, the rear-facing camera module 120 may be mounted on a middle upper portion or right upper portion of the rear cover 20. For another example, the front-facing camera module 110 or the rear-facing camera module 120 may be disposed on a movable component in the electronic device 100. The movable component is moved, so that the movable component may be hidden inside the electronic device 100, or may extend out of the electronic device 100.

It should be understood that a quantity of mounted front-facing camera modules 110 and a quantity of mounted rear-facing camera modules 120 shown in FIG. 1 are merely examples. The quantity of mounted camera modules may not be limited in this application. The electronic device 100 may include more or fewer camera modules.

FIG. 2 is a diagram of a structure of a camera module according to an embodiment of this application. The camera module may be the front-facing camera module 110 or the rear-facing camera module 120 of the electronic device shown in FIG. 1. The camera module may include a drive module 210, a lens 220, and an image sensor 230. The camera module may further include a filter, a circuit board, a support, and the like, which are not shown in FIG. 2. After passing through a protective cover of the camera module of the electronic device and a light transmission hole of a decorative member, external light may pass through the lens 220 and reach the image sensor 230.

The lens 220 may include a convex lens and/or a concave lens, and is mainly configured to: change a propagation path of light and converge the external light, to facilitate imaging. The lens 220 may be made of glass, a plastic, or the like.

The image sensor 230 may be a sensor like a charge coupled device (charge coupled device, CCD) or a sensor like a complementary metal oxide semiconductor (complementary metal oxide semiconductor, CMOS). For a sensor like a CMOS, the sensor may be specifically based on RGGB, or may be based on RYYB. Further, the image sensor 230 may be mainly configured to: receive light from the lens 220, and convert an optical signal into an electrical signal, to meet an imaging requirement of the camera module. In this case, the image sensor 230 may be disposed opposite to the lens 220 in an optical axis direction of the lens 220.

The drive module 210 may be a motor, configured to carry the lens 220, and is disposed to drive the lens 220, so that the drive module 210 meets requirements such as focusing, image stabilization, and zooming of the lens 220, thereby improving an imaging effect of the camera module.

It should be noted that the drive module 210 in this embodiment of this application may implement one or a combination of functions such as automatic focusing (autofocus, AF) and optical image stabilization (optical image stabilization, OIS) of the camera module.

Automatic focusing may mean that, by using a lens imaging principle and an optical reflection principle, light reflected by a photographed object may be imaged on the image sensor after passing through a lens array; and one or more lenses in the lens array are moved based on an object distance of the photographed object, so that a clear image may be formed on the image sensor. Automatic focusing may be simply considered as movement of a lens array or a lens in an optical axis direction.

Optical image stabilization may mean that a placement angle, a placement position, or the like of a lens array is adjusted, so that a phenomenon of instrument jitter occurring in a process of capturing an optical signal can be reduced, and then imaging quality can be improved. In a possible method, a to-be-compensated displacement or angle is detected by using, for example, a gyroscope, and then the lens array is driven by a motor to perform translation or rotation, so that image blur caused by jitter of an imaging instrument device during exposure can be compensated. Optical image stabilization may be simply considered as translation or rotation of the lens array on a plane perpendicular to an optical axis.

In this embodiment of this application, an example in which the drive module implements automatic focusing is mainly used for description.

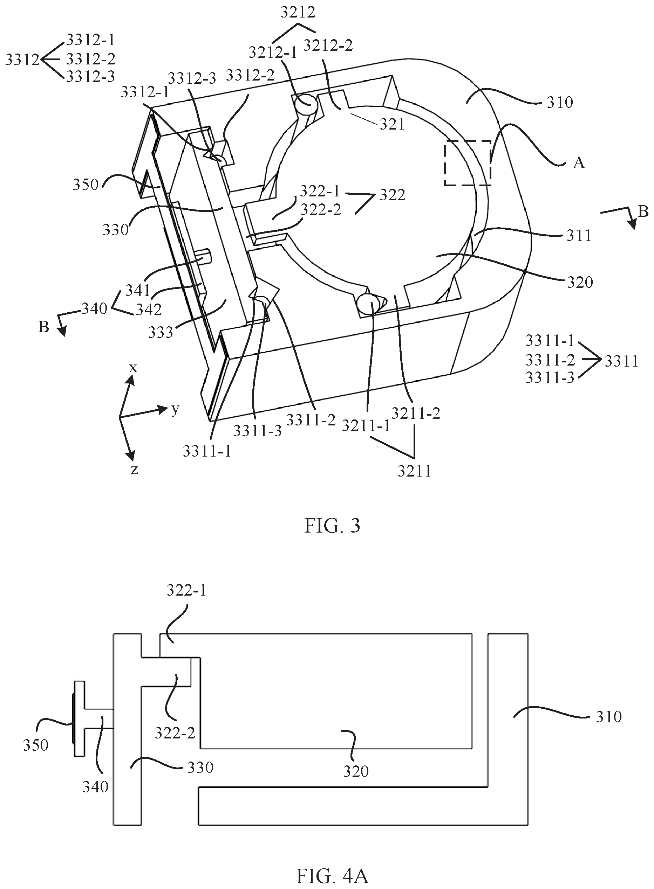

FIG. 3 is a diagram of a structure of a drive module according to an embodiment of this application. As shown in FIG. 3, the drive module includes: a fixed member 310, a movable member 320, a driven member 330, a harmonic oscillator 340, and a preload member 350. The fixed member 310 includes a first mounting hole 311. The movable member 320 is configured to carry an optical element, and the movable member 320 is disposed in the first mounting hole 311. The preload member 350 is configured to cooperate with the harmonic oscillator 340, to drive the driven member 330 to reciprocate along a first direction relative to the fixed member 310. When the driven member 330 reciprocates along the first direction relative to the fixed member 310, the driven member transmits movement of the driven member 330 along the first direction to the movable member 320 via a transmission structure 322, to drive the movable member 320 to reciprocate along the first direction.

Because the transmission structure in the drive module provided in this embodiment of this application transmits the movement of the driven member 330 along the first direction, and movement in another direction is not transmitted to the movable member 320, stability of the movement of the movable member 320 along the first direction can be improved. In addition, in this embodiment of this application, a piezoelectric principle is used for driving, thereby providing a large driving stroke. Compared with a voice coil motor, this embodiment of this application can reduce movement instability and inaccuracy caused by magnet interference.

When the drive module is configured to implement automatic focusing, the first direction may be an optical axis direction (an x-axis direction in FIG. 3, also an axial direction of the first mounting hole) of the optical element carried by the movable member 320.

The fixed member 310 may include a support or a base, or may include another stationary member (a component whose position does not change) disposed on the support or the base, and may be a mechanical part whose position does not change in the entire drive module. A shape of the fixed member 310 may be a square, a rectangle, a circle, or a structure of another shape. In FIG. 3, the shape is illustrated as a square with rounded corners. The first mounting hole 311 may be a through hole or a blind hole, and is configured to accommodate the movable member 320. An axis of the first mounting hole 311 may coincide with an optical axis of the optical element carried by the movable member 320.

The optical element carried by the movable member 320 may be a lens, and the lens may be a single lens or a plurality of lenses. Alternatively, the optical element carried by the movable member 320 may be a lens and an aperture stop. When the movable member 320 carries more than one optical element, the movable member 320 may be of a split structure, and portions that are of the movable member 320 and that carry different optical elements may be connected in different connection manners, for example, connected in a magnetic attraction or snap-fit manner, and the different optical elements need to move together, so that a distance between the different optical elements remains constant.

The movable member 320 may reciprocate along the first direction relative to the fixed member 310 via a first guide structure. In FIG. 3, the first guide structure includes two sets of guide structures. A first set 3211 of the first guide structure includes a first guide shaft 3211-1 and a first groove 3211-2, and a second set 3212 of the first guide structure includes a second guide shaft 3212-1 and a guide portion 3212-2. The first guide shaft 3211-1, the second guide shaft 3212-1, the first groove 3211-2, and the guide portion 3212-2 all extend along the first direction. The two guide shafts may be fastened to the fixed member 310, for example, may be integrally formed with the fixed member 310, or may be fastened to the fixed member 310 in a manner of threaded connection, snap-fit connection, or the like. The first groove 3211-2 corresponding to the first guide shaft 3211-1 and the guide portion 3212-2 corresponding to the second guide shaft 3212-1 may be separately provided on a periphery of the movable member 310. The first groove 3211-2 may be a V-shaped groove shown in the figure or a groove in another shape, for example, a circular groove or a semi-circular groove. The second guide shaft 3212-1 may mainly play a stabilization role, and the second guide shaft 3212-1 may cooperate with the guide portion 3212-2, so that the entire movable member 320 does not rotate around the first guide shaft 3211-1 when moving.

In an embodiment, to increase movement stability of the movable member 320, a second magnetic attraction assembly may be disposed in the drive module, to enable the first guide shaft 3211-1 to abut against the first groove 3211-2. The second magnetic attraction assembly may also enable the second guide shaft 3212-1 to abut against the guide portion 3212-2. For example, a magnetic attraction member may be disposed on the fixed member 310, and another magnetic attraction member may be disposed on the movable member 320. An acting force between the two magnetic attraction members of the fixed member 310 and the movable member 320 may generate a shaft holding force between the movable member 320 and the fixed member 310.

The acting force between the two magnetic attraction members may be an attractive force. For example, the two magnetic attraction members may be magnets with different polarities, or one of the magnetic attraction members is a magnet, and the other is made of a ferromagnetic material.

The acting force between the two magnetic attraction members may alternatively be a repulsive force. For example, the two magnetic attraction members are magnets with a same polarity.

Based on different types of acting forces between the magnetic attraction members, positions of a first magnetic attraction member and a second magnetic attraction member are set, so that the movable member 320 generates a shaft holding force on a guide shaft of the fixed member 310. As a result, the reciprocating movement of the movable member 320 along the first direction via the first guide structure is more stable. In addition, in a scenario like dropping of a device that includes the drive module, even if the movable member 320 experiences off-axis movement, the movable member 320 can return to an initial position under an action of a magnetic attraction force, thereby improving reliability of the drive module in this embodiment of this application.

For example, when the acting force between the magnetic attraction members is an attractive force, the magnetic attraction members that provide the attractive force may be respectively disposed on the first guide shaft 3211-1 and the first groove 3211-2, and respectively disposed on the second guide shaft 3212-1 and the guide portion 3212-2, so that the first guide shaft 3211-1 abuts against the first groove 3211-2, and the second guide shaft 3212-1 abuts against the guide portion 3212-2.

For another example, when the acting force between the magnetic attraction members is a repulsive force, the magnetic attraction members that provide the repulsive force may be respectively disposed at a corresponding position of the fixed member 310, for example, at a position shown by a dashed-line box A in FIG. 3, and a side that is of the movable member 320 and that is away from the guide shaft, so that the movable member 320 is pushed to the fixed member 310 by the repulsive force between the magnetic attraction members.

In an embodiment, the two magnetic attraction members may be mounted in grooves reserved on the guide shaft and the movable member 320. In another embodiment, the guide shaft may be integrally formed as a magnet (serving as a magnetic attraction member), and a frame of the movable member 320 may be made of a ferromagnetic material (serving as another magnetic attraction member). Consequently, an attractive force exists between the movable member 320 and the guide shaft. In another embodiment, the guide shaft may be a magnet (serving as a magnetic attraction member), and the movable member 320 is provided with a groove that accommodates a ferromagnetic material and that is used for disposing a magnetic attraction member.

It should be understood that a form of the first guide structure and a quantity of guide shafts in FIG. 3 are merely examples. For example, when the first guide structure is a guide shaft-and-groove combination, the first guide structure may include only fewer than or more than two guide shafts. For another example, the first guide structure may alternatively be a sliding block-and-guide rail combination, a groove-and-ball combination, a guide shaft-and-shaft sleeve combination, or the like. A form of the first guide structure is not limited in this application.

The driven member 330 may reciprocate along the first direction relative to the fixed member 310 via a second guide structure. In FIG. 3, the second guide structure includes two sets of guide structures. A first set 3311 of the second guide structure includes a first groove body 3311-1 provided on the driven member 330, a second groove body 3311-2 provided on the fixed member 310, and a first ball 3311-3; and a second set 3312 of the second guide structure includes a third groove body 3312-1 provided on the driven member 330, and a fourth groove body 3312-2 provided on the fixed member 310, and a second ball 3312-3. Both the first groove body 3311-1 and the second groove body 3311-2 may be V-shaped grooves (with V-shaped cross sections), the third groove body 3312-1 may be a V-shaped groove, and the fourth groove body 3312-2 may be a U-shaped groove (with U-shaped cross sections). In this way, the first ball 3311-3 may slide smoothly and accurately in an accommodation groove formed by the first groove body 3311-1 and the second groove body 3311-2. Meanwhile, when the second ball 3312-3 rolls in an accommodation groove formed by the third groove body 3312-1 and the fourth groove body 3312-2, disturbance in a non-X-axis direction may be fine-tuned, to reduce a possibility of sticking generated when the driven member 330 drives the movable member 320 to reciprocate along the first direction.

In an embodiment, there is a magnetic attraction force between the ball and the accommodation groove, to facilitate assembly of the drive module. For example, there is a magnetic attraction force between the ball and a groove body provided on the fixed member 310, so that during assembly of the driven member 330, the ball can be attracted in the groove body provided on the fixed member 310.

FIG. 3 shows that the second guide structure includes two sets of guide structures. In an actual case, the second guide structure may alternatively include fewer or more sets of similar guide structures, that is, include more or fewer balls and corresponding accommodation grooves. In addition, a quantity of balls disposed in each accommodation groove is not limited to one, and each accommodation groove may include more balls. In addition, a sliding connector applicable to the accommodation groove in the second guide structure may not be limited to a ball, for example, may alternatively be a sliding block. That is, the second guide structure may be a sliding block-and-guide rail combination, a guide shaft-and-shaft sleeve combination, a guide shaft-and-groove combination, or the like. This is not limited in this application.

The driven member 330 may transmit, via the transmission structure 322, the movement of the driven member 330 along the first direction, so that when the driven member 330 reciprocates along the first direction relative to the fixed member 310, the movable member 320 may be driven to move along the first direction via the transmission structure 322.

FIG. 4A is a sectional view of the drive module shown in FIG. 3 along a B-B plane (XY plane). As shown in FIG. 4A, the transmission structure 322 includes a first limiting portion 322-1 disposed on the movable member 320 and a second limiting portion 322-2 disposed on the driven member 330. The first limiting portion 322-1 and the second limiting portion 322-2 may respectively have a first surface and a second surface that are opposite to each other. In addition, a magnetic attraction force exists between the first limiting portion 322-1 and the second limiting portion 322-2. In this way, when the driven member 330 moves in a positive direction of the X-axis, the second surface of the driven member 330 may push, via the first surface, the movable member 320 to move in the positive direction of the X-axis. When the driven member 330 moves in a negative direction of the X-axis, the movable member 320 may be attracted to move in the negative direction of the X-axis via a magnetic attraction force between the driven member 330 and the movable member 320, thereby allowing the driven member 330 to drive the movable member 320 to move. When the driven member 330 drives the movable member 320 to move, the first surface and the second surface may always be in a contact state.

Due to a machining error, there is actually an included angle between guiding directions of the second guide structure and the first guide structure. In addition, due to external vibration or the like, movement of the driven member 330 may include not only a component along the first direction (X-axis) but also positional disturbance in a Y direction or a Z direction. However, the transmission structure 322 provided in this embodiment of this application enables displacements of the driven member 330 in the Y direction and the Z direction to be absorbed (for example, a friction force between the first surface and the second surface that are in contact may be low), and the displacement of the driven member 330 in the Y direction or the Z direction may not cause a displacement of the movable member 320 in the Y direction or the Z direction, thereby improving the movement stability of the movable member 320.

In addition, the arrangement of the magnetic attraction force between the two limiting portions ensures that even if there is a relative displacement in the Y direction or the Z direction between the two limiting portions, an attractive force of the two limiting portions is always along the first direction, thereby further improving the movement stability of the movable member 320 in the technical solution of this embodiment of this application.

The transmission structure 322 shown in FIG. 3 may be contact transmission, and does not cause a problem of transmission hysteresis. When the movable member 320 is maintained at a fixed position, no power supply is required, so that energy consumption can be reduced in comparison with voice coil motor-type drive.

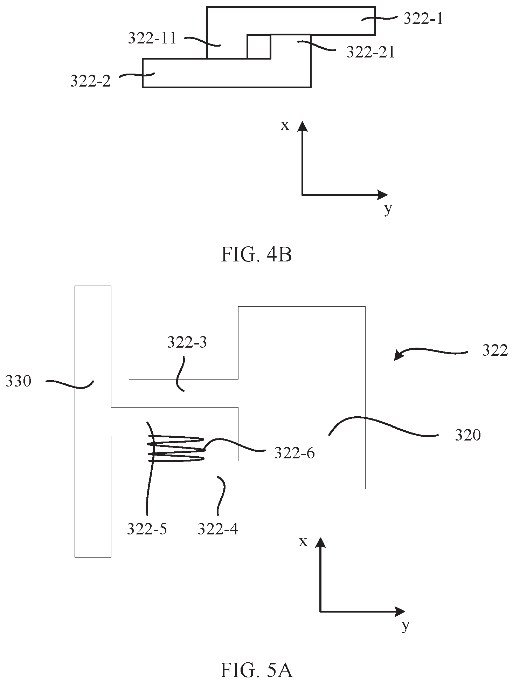

In addition, the transmission structure 322 may further include a blocking mechanism. As shown in FIG. 4B, for example, stop blocks 322-11 and 322-21 are respectively disposed on the first limiting portion 322-1 and the second limiting portion 322-2. The stop blocks may limit a relative displacement between the driven member 330 and the movable member 320 along the Y direction and/or the Z direction to a specific range, so that reliability of the technical solution in this embodiment of this application can be improved. The blocking mechanism is not limited to being implemented as stop blocks, for example, may alternatively be implemented as limiting pins. This is not limited in this application.

In this embodiment of this application, the transmission structure 322 is not limited to the forms shown in FIG. 3 and FIG. 4A and FIG. 4B. FIG. 5A to FIG. 5C are diagrams of a structure of the transmission structure 322 in another form according to an embodiment of this application. In the transmission structure shown in FIG. 5A to FIG. 5C, there may be no magnetic attraction force between limiting portions.

Specifically, as shown in FIG. 5A, a third limiting portion 322-3 and a fourth limiting portion 322-4 may be disposed on the movable member 320, a fifth limiting portion 322-5 may be disposed on the driven member 330, the fifth limiting portion 322-5 is located between the third limiting portion 322-3 and the fourth limiting portion 322-4 along the X-axis, and the third limiting portion 322-3 and the fifth limiting portion 322-5 may respectively include two corresponding surfaces (a third surface and a fourth surface). An elastic component 322-6 (a second elastic component) may be disposed between the fourth limiting portion 322-4 and the fifth limiting portion 322-5, and the elastic component 322-6 may have a large elastic coefficient along the X-axis.

When the driven member 330 moves in a positive direction of the X-axis, the driven member 330 may push, via a surface in contact with the third limiting portion 322-3, the movable member 320 to move in the positive direction of the X-axis. When the driven member 330 moves in a negative direction of the X-axis, an elastic force provided by compression of the elastic component 322-6 may cause the movable member 320 to move in the negative direction of the X-axis. To reduce a degree of hysteresis generated when the movable member 320 moves in the negative direction of the X-axis, the elastic component 322-6 may be in a preloaded state, for example, pre-compressed, so that when the driven member 330 generates a small displacement in the negative direction of the X-axis, the movable member 320 may be pushed to move.

To reduce impact of a displacement of the driven member 330 along the Y-axis or the Z-axis on movement stability of the movable member 320, the elastic component 322-6 may have a small elastic coefficient along the Y-axis or the Z-axis. For example, the elastic coefficient along the Y-axis or the Z-axis may be substantially less than the elastic coefficient along the X-axis direction. For example, the elastic coefficient of the elastic component 322-6 along the X-axis may be at least hundreds of times the elastic coefficient along the Y-axis or the Z-axis.

The elastic component 322-6 may be an elastic leaf spring, or may be a component like rubber or a spring. This is not limited in this application.

When the elastic component 322-6 is a spring, a guide shaft may be formed in a protruding manner on an opposing surface of the fourth limiting portion 322-4 or the fifth limiting portion 322-5, and disposed at an axis of the spring. This ensures that the spring always extends and contracts along the guide shaft, thereby minimizing a degree of tilting, and also facilitating positioning and preloading of the spring.

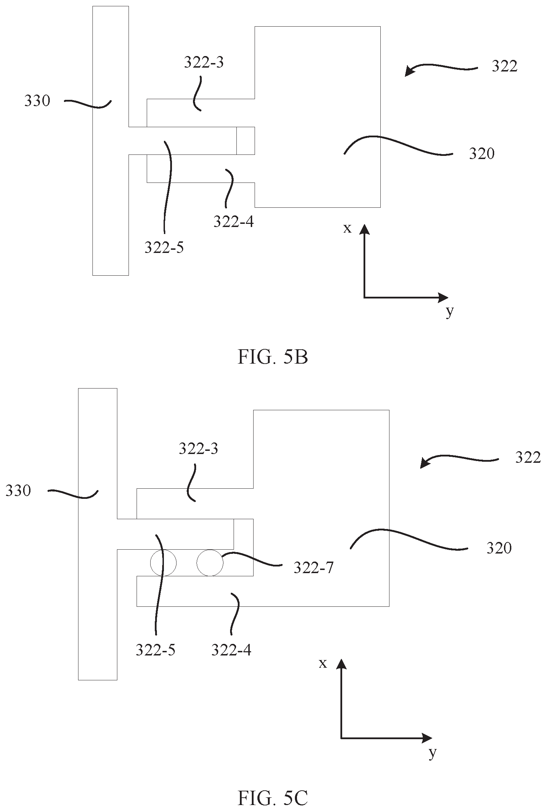

Compared with the structure in FIG. 5A, the transmission structure 322 shown in FIG. 5B does not require an elastic component to be provided. Instead, the fifth limiting portion 322-5 is directly disposed between the third limiting portion 322-3 and the fourth limiting portion 322-4. In the X-axis direction, the fifth limiting portion 322-5 may be in an interference fit state relative to a gap between the third limiting portion 322-3 and the fourth limiting portion 322-4. In this way, a friction force between the fifth limiting portion 322-5 and the third limiting portion 322-3 or the fourth limiting portion 322-4 is reduced, and then impact of disturbance of the driven member 330 in a non-active direction (a non-X-axis direction) on the movement of the movable member 320 is reduced.

In this embodiment, when the driven member 330 moves in the negative direction or the positive direction of the X-axis, the movable member 320 is pushed, via a surface in contact with the third limiting portion 322-3 and a surface in contact with the fourth limiting portion 322-4 respectively, to move in a corresponding direction.

In the transmission structure 322 shown in FIG. 5C, a ball 322-7 may be disposed between the fourth limiting portion 322-4 and the fifth limiting portion 322-5. When the driven member 330 moves in the positive direction of the X-axis, the movable member 320 may be pushed, via the surface in contact with the third limiting portion 322-3, to move in the positive direction of the X-axis. When the driven member 330 moves in the negative direction of the X-axis, the movable member 320 may be pushed, via the ball 322-7, to move in the negative direction of the X-axis. The ball 322-7 can reduce a friction force between the driven member 330 and the movable member 320, resulting in more stable movement of the movable member 320 along the first direction.

A quantity of the balls 322-7 may be set arbitrarily, and the ball 322-7 may also be replaced with a component like a sliding block.

It should be understood that a form of the foregoing transmission structure 322 may be changed to some extent. For example, for the transmission structures 322 in FIG. 3, FIG. 4A, and FIG. 4B, relative positions of the first limiting member 322-1 and the second limiting member 322-2 on the X-axis may be exchanged. In this way, when the driven member 330 moves in the positive direction of the X-axis, the movable member 320 may be attracted, via a magnetic attraction force, to move in the positive direction of the X-axis; and when the driven member 330 moves in the negative direction of the X-axis, the movable member 320 may be pushed, via an abutting surface, to move in the negative direction of the X-axis.

For the transmission structure shown in FIG. 5A or FIG. 5C, the elastic component 322-6 or the ball 322-7 may be disposed between the third limiting portion 322-3 and the fifth limiting portion 322-5. In this way, when moving in the positive direction of the X-axis, the driven member 330 pushes, via the elastic component 322-6 or the ball 322-7, the movable member 320 to move; and when moving in the negative direction, the driven member 330 pushes, via surfaces that are in contact with each other, the movable member 320 to move.

Alternatively, two limiting portions may be disposed on the driven member 330, and one limiting portion clamped between the two limiting portions is disposed on the movable member 320, and the elastic component 322-6 may be disposed at any position.

Alternatively, an elastic component or any quantity of balls may be disposed between the third limiting portion 322-3 and the fifth limiting portion 322-4, or any quantity of balls may be disposed between the fourth limiting portion 322-4 and the fifth limiting portion 322-5. This is not limited in this application.

For the transmission structure shown in FIG. 5B, two limiting portions may be disposed on the driven member 330, and one limiting portion clamped between the two limiting portions is disposed on the movable member 320.

In addition, for the transmission structures 322 shown in FIG. 4A, FIG. 4B, and FIG. 5A to FIG. 5C, a lubricating fluid or the like may be further disposed between surfaces of limiting portions that are in contact with each other, so that a friction force between the limiting portions is reduced, and the movable member 320 moves more smoothly along the first direction.

It should be further understood that, in addition to the forms shown in FIG. 4A, FIG. 4B, and FIG. 5A to FIG. 5C, the transmission structure may be in another form. For example, a protrusion and a recess that mate with each other may be respectively disposed on the driven member 330 and the movable member 320, and sizes of the recess along the Y-axis and the Z-axis may be greater than a size of the protrusion along the Y-axis or the Z-axis direction, so that disturbance of the driven member 330 along the Y-axis or the Z-axis may be absorbed by the transmission structure, thereby improving the movement stability of the movable member 320. A form of the transmission structure 322 is not limited in this application. In addition, on the transmission structure shown in FIG. 5A to FIG. 5C, stop blocks similar to those shown in FIG. 4B may also be disposed, to limit a relative displacement between the driven member 330 and the movable member 320 along the Y-axis or the Z-axis to a specific range.

The harmonic oscillator 340 operates based on an inverse piezoelectric effect of a piezoelectric material. The inverse piezoelectric effect means that when an electric field is applied to a polarization direction of a dielectric, the dielectric may generate mechanical deformation or mechanical stress in a specific direction. When the external electric field is removed, the deformation or mechanical stress accordingly disappears. In some embodiments, when the piezoelectric material is not preloaded or a current is very small, the piezoelectric material is in an initial state; when a positive current is applied to the piezoelectric material, the piezoelectric material extends and is in an extended state; or when a negative current is applied to the piezoelectric material, the piezoelectric material contracts and is in a shortened state. In other words, the piezoelectric material deforms based on the applied electrical signal. When the electrical signal is an alternating signal, the piezoelectric material performs an extending action and a contracting action cyclically.

The piezoelectric material is mechanically deformed by using a control signal applied to the piezoelectric material. After a periodic electrical signal is applied, the piezoelectric material may be periodically deformed with the periodic electrical signal, to perform periodic movement or vibration. The piezoelectric material may be an inorganic piezoelectric material, for example, a piezoelectric crystal or a piezoelectric ceramic, or may be an organic piezoelectric material, for example, polyvinylidene fluoride. A type of the piezoelectric material used by the harmonic oscillator 340 is not limited in this application.

The harmonic oscillator 340 may include a contact portion 341 and a support portion 342, and the contact portion 341 is configured to be in contact with another component to provide a friction force as a driving force.

The contact portion 341 may perform arcuate or elliptical movement along with the periodic deformation of the piezoelectric material. A current characteristic of the piezoelectric material and a quantity of the contact portions 341 are controlled, so that the contact portion 341 may move in a corresponding direction.

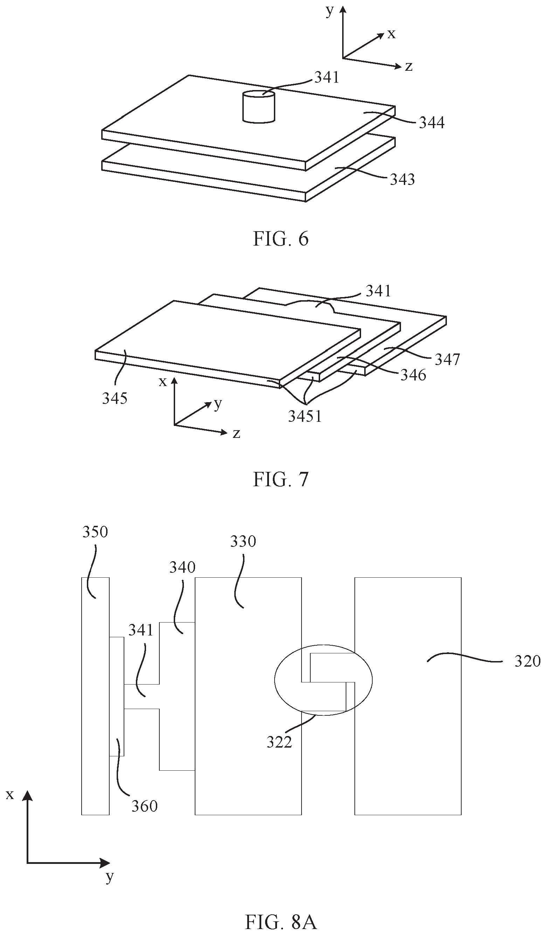

FIG. 6 is a diagram (an exploded view) of a structure of a harmonic oscillator according to an embodiment of this application. The harmonic oscillator 340 may include a piezoelectric material plate (a first piezoelectric plate 343) and a vibration plate 344. The vibration plate 344 and the first piezoelectric plate 343 may be combined through adhesive bonding, threaded connection, or the like. One surface of the vibration plate 344 protrudes outward to form the contact portion 341. The first piezoelectric plate 343 and another portion of the vibration plate 344 except the contact portion 341 jointly form the support portion 342. The preload force of the preload member 350 may have a component force along the Y-axis direction (a thickness direction of the plates of the harmonic oscillator 340) when the harmonic oscillator 340 is in operation, so that the contact portion 341 abuts tightly against an end surface 333 of the driven member 330, and drives, via a friction force, the driven member 330 to move along the X-axis direction.

It should be understood that FIG. 6 shows only one contact portion 341. In an actual case, a quantity of the contact portions 341 may be set based on a requirement. For example, a plurality of contact portions may be disposed, and movements of different contact portions 341 may be combined, so that the driven member 330 moves along the first direction.

In the embodiment of FIG. 6, a driving force is provided by using a plate surface of the harmonic oscillator 340 and the contact portion 341 disposed on the plate surface. In some embodiments, the harmonic oscillator 340 may still be an overall plate-like structure, but a driving force is provided by using a side surface of the harmonic oscillator 340.

As shown in FIG. 7, the harmonic oscillator 340 may include two piezoelectric material plates (a second piezoelectric plate 345 and a third piezoelectric plate 347) and a vibration plate 346 clamped between the two piezoelectric material plates. The piezoelectric material plate and the vibration plate 346 may be combined together through adhesive bonding, threaded connection, or the like. A side edge of the vibration plate 346 may protrude outward to form the contact portion 341, and the second piezoelectric plate 345, another portion of the vibration plate 346 except the contact portion 341, and the third piezoelectric plate 347 form the support portion 342. When the harmonic oscillator shown in FIG. 7 is used in the drive module shown in FIG. 3, the preload member 330 may apply, via the side surface 3451 of the harmonic oscillator 340, a preload force including a component force along the Y-axis direction to the harmonic oscillator 340 when the harmonic oscillator 340 is in operation, so that the contact portion 341 of the harmonic oscillator 340 abuts tightly against the end surface 333 of the driven member 330, and may drive, via a friction force, the driven member 330 to move along the X-axis direction when the contact portion 341 moves along the X-axis direction.

In the embodiment of FIG. 3, the harmonic oscillator 340 may vibrate based on an applied electrical signal, thereby driving the driven member 330 via a friction force between the harmonic oscillator 340 and the driven member 330, which in turn drives the movable member 320 to displace. In addition, disturbance of the driven member 330 along the Y direction and the Z direction may be absorbed by the transmission structure 322 between the driven member 330 and the movable member 320.

It should be understood that a vibration plate is disposed on the harmonic oscillators 340 shown in FIG. 6 and FIG. 7. In some embodiments, the harmonic oscillator 340 may not include the vibration plate, and the contact portion is directly disposed on a piezoelectric plate, so that driving efficiency can be improved.

The preload member 350 may be a rigid component, or may be an elastic component. In the drive module shown in FIG. 3, the preload member 350 may be disposed on the fixed member 310, for example, may be fastened to the fixed member 310 via a threaded connector, or in a connection manner like adhesive bonding or snap-fit connection. The preload member 350 can provide a preload force to the harmonic oscillator 340, so that the harmonic oscillator 340 can abut against the driven member 330. A value of the pressure provided by the preload member 350 is changed, so that a value of the friction force between the harmonic oscillator 340 and the driven member 330 may be changed, thereby providing driving forces of different values for the movement of the driven member 330.

A friction portion with a large friction coefficient may be disposed at a position that is on the driven member 330 and that is in contact with the harmonic oscillator 340. When the harmonic oscillator 340 vibrates, a driving force may be provided for the driven member 330 via the friction portion.

In the drive module in FIG. 3, the harmonic oscillator 340 may be fastened to the preload member 350, and drive the driven member 330 to move along the X-axis direction. That is, among the three components: the preload member 350, the harmonic oscillator 340, and the driven member 330, only the driven member 330 is a moving member, and the other two are stationary members. In some embodiments, among the three components, in addition to the driven member 330, the harmonic oscillator 340 and/or the preload member 350 may also be a moving member. In this case, the driven member 330, the harmonic oscillator 340, and the preload member 350 may have different positions or connection relationships from those shown in FIG. 3.

FIG. 8A to FIG. 8D are diagrams of different connection relationships between a preload member, a driven member, and a harmonic oscillator according to an embodiment of this application. In FIG. 8A to FIG. 8D, an X direction is a movement direction of the movable member 320, and a y direction is a direction of a preload force of the harmonic oscillator 340.

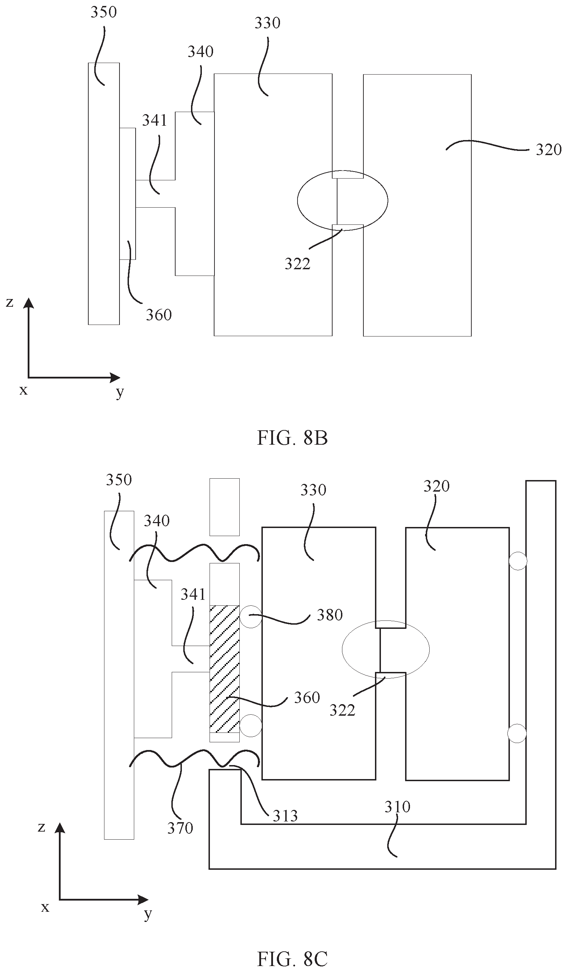

In an embodiment, with reference to FIG. 8A and FIG. 8B, FIG. 8A is a diagram in an xy plane, and FIG. 8B is a diagram that is in a zy plane and that corresponds to FIG. 8A. The harmonic oscillator 340 may be fastened to the driven member 330, the contact portion 341 of the harmonic oscillator 340 may be disposed toward the preload member 350, and a friction member 360 may be disposed between the preload member 350 and the harmonic oscillator 340. The friction member 360 may be disposed separately with the preload member 350, and the friction member 360 may alternatively be a region with a large friction coefficient on the preload member 350. The preload member 350 may be fastened to the fixed member 310 similar to that in FIG. 3, and can abut tightly against the harmonic oscillator 340 along the Y-axis direction. The contact portion 341 of the harmonic oscillator 340 may enable, via a friction force between the harmonic oscillator 340 and the friction member 360 when the harmonic oscillator 340 vibrates, the harmonic oscillator 340 and the driven member 330 to reciprocate along the X-axis, so that the driven member 330 drives, via the transmission structure 322, the movable member 320 to move. In this embodiment, the harmonic oscillator 340 and the driven member 330 are moving members, and the preload member 350 is a stationary member.

In another embodiment, as shown in FIG. 8C, the harmonic oscillator 340 may be fastened to the preload member 350, but the preload member 350 may move along the X-axis direction (perpendicular to a direction of the plane of the paper) relative to the fixed member 310 via a guide structure. The friction portion 360 may be disposed on a portion that is on the fixed member 310 and that is located between the harmonic oscillator 340 and the driven member, and the contact portion 341 of the harmonic oscillator 340 may be in frictional contact with the friction portion 360 via the pressure of the preload member 350. The preload member 350 may be connected to the driven member 330 via a spring 370 or another connection component (for example, a connection shaft). The spring 370 may pass through a through hole 313 in the fixed member 310 to connect the preload member 350 and the driven member 330. A guide structure may be disposed between the driven member 330 and the fixed member 310. To reduce a friction force between the driven member 330 and the fixed member 310, the guide structure may employ a rolling member 380. When the harmonic oscillator 340 receives an electrical signal and vibrates, the harmonic oscillator 340 drives, via a friction force between the harmonic oscillator 340 and the friction portion 360, the preload member 350 to move, thereby driving the driven member 330 to move. The driven member 330 drives, via the transmission structure 322, the movable member to move along the X-axis (the X-axis direction is perpendicular to the plane of the paper). In this embodiment, the harmonic oscillator 340, the preload member 350, and the driven member 330 are all moving members.

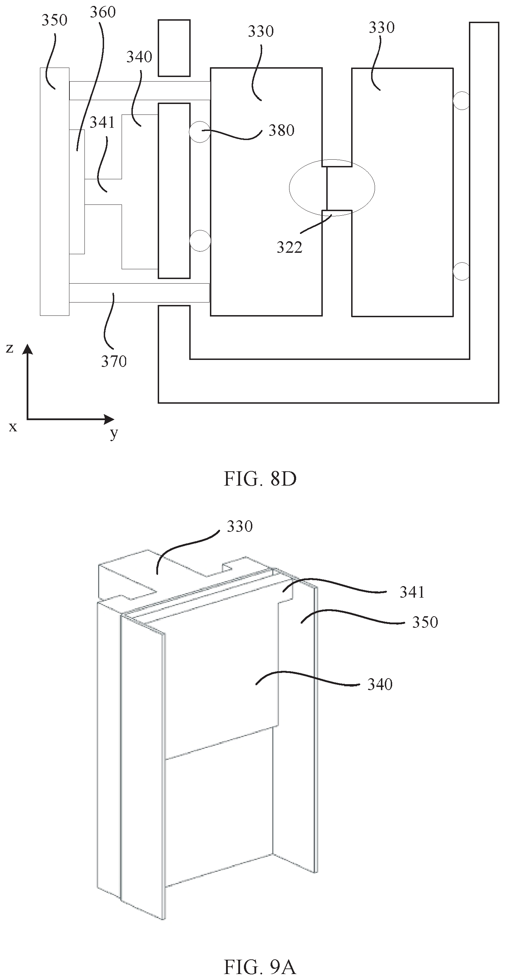

In another embodiment, as shown in FIG. 8D, the harmonic oscillator 340 is fastened to the fixed member 310, and the preload member 350 is fastened to one friction member 360 and may move along the X-axis direction as a whole. The preload member 350 and the driven member 330 may be connected by a connection structure 370, to drive the driven member 330 to move via the guide structure 380. When the harmonic oscillator 340 is in operation, the friction member 360 and the preload member 350 are driven by a friction force to move along the X-axis direction, and the preload member 350 drives the driven member 330 to move via the connection structure 370, so that the movable member 320 may move along the X-axis direction. In this embodiment, the preload member 350 and the driven member 330 are moving members, and the harmonic oscillator 340 is a stationary member.

It should be understood that, regardless of a connection relationship between the preload member, the harmonic oscillator, and the driven member, one of the harmonic oscillator 340 and a component in frictional contact with the harmonic oscillator 340 is a moving member, and the other is a stationary member. For example, in FIG. 3, the harmonic oscillator 340 is a stationary member, and a component (the driven member 330) in frictional contact with the harmonic oscillator 340 is a moving member; in FIG. 8A and FIG. 8B, the harmonic oscillator 340 is a moving member, and the friction member 360 in frictional contact with the harmonic oscillator 340 is a moving member; in FIG. 8C, the harmonic oscillator 340 is a moving member, and the friction portion in frictional contact with the harmonic oscillator 340 is located on the fixed member 310, and is a stationary member; and in FIG. 8D, the harmonic oscillator 340 is a stationary member, and the friction member 360 in frictional contact with the harmonic oscillator 340 is a moving member. The moving member may directly or indirectly drive the driven member 330 to move. For example, the moving member itself may be the driven member 330. Alternatively, the moving member may be a preload member or a separately disposed friction member, and different connection relationships may be set to finally drive the driven member 330 to move. The friction member may be disposed independent of the preload member 350, the fixed member 310, and the driven member 330, or may be a portion of the foregoing three components. In addition, in some embodiments, the preload member 350 and the driven member 330 may be one component, or the preload member 350, the driven member 330, and the friction member may be combined into one component. This is not limited in this application. The structures shown in FIG. 3 and FIG. 8A to FIG. 8D are merely examples. There may be another connection relationship between the driven member 330, the preload member 350, and the harmonic oscillator 340. For example, based on the diagram in FIG. 3 or FIG. 6, more components may be added or different movement transmission manners may be set. This is not limited in this application.

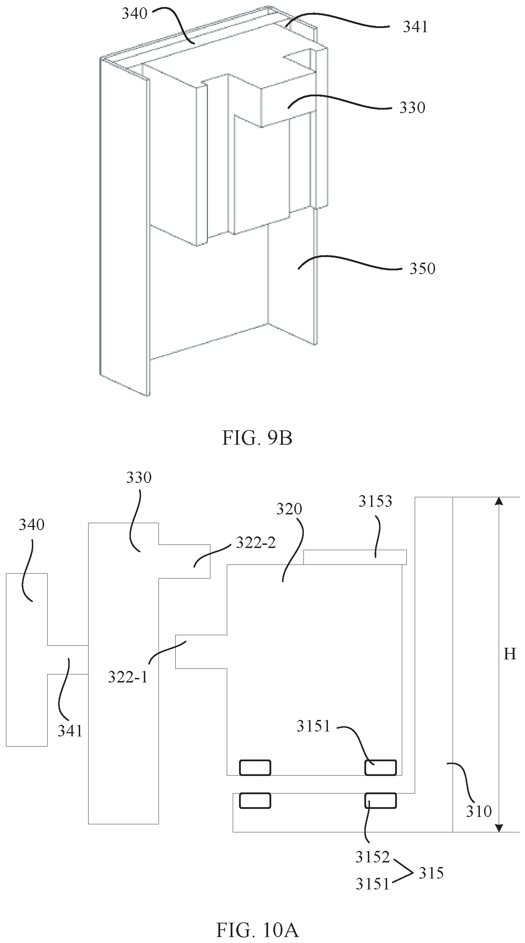

When the harmonic oscillator 340 provides a driving force through a side surface, the driven member 330 and the preload member 350 may be combined into one component, and a structure shown in FIG. 9A and FIG. 9B may be employed between the component and the harmonic oscillator 340. In FIG. 9A and FIG. 9B, the harmonic oscillator 340 may provide a driving force through two side surfaces, which can improve a driving effect. The side surfaces of the harmonic oscillator 340 protrude to form two symmetrical contact portions 341, and the two contact portions 341 are in contact with the preload member 350. In FIG. 9A, the harmonic oscillator 340 is a stationary member, for example, may be fastened to the fixed member 310, and the preload member 350 is driven by a friction force to drive the driven member 330 to move, thereby driving the movable member to move. In FIG. 9B, the harmonic oscillator 340 is a moving member, and the preload member 350 is a stationary member, for example, may be fastened to the fixed member 310. The harmonic oscillator 340 may drive, via a friction force, the harmonic oscillator 340 and the driven member 330 fastened to the harmonic oscillator 340 to move, thereby driving the movable member to move.

It should be understood that, when the harmonic oscillator 340 provides the driving force through the two side surfaces, a connection relationship between the harmonic oscillator 340, the preload member 350, and the driven member 330 may alternatively be in another form. For example, the preload member 350 and the fixed member 310 may be a same component. A relationship between the three components is not limited in this application.

It should be further understood that, in the foregoing embodiments, the technical solutions in embodiments of this application are described by using only an example in which one harmonic oscillator and one preload member are disposed in the drive module. Actually, the drive module may include a plurality of harmonic oscillators or a plurality of preload members. This is not limited in this application.

When the drive module is used in a camera module, the camera module may further include a position sensor and a control unit. The position sensor may be a Hall position sensor or a TMR sensor. The position sensor and the control unit may be an integrated control IC (integrated circuit). The control unit determines a current position and a target position of the movable member 320. When the current position does not reach the target position, the control unit may further trigger a control instruction to input a corresponding electrical signal to the harmonic oscillator 340. This allows the movable member 320 to finally move to the target position, thereby implementing closed-loop position control.

In some embodiments, when a transmission structure between the driven member 330 and the movable member 320 employs the structure shown in FIG. 4A and FIG. 4B, a movement process of the movable member 320 may be divided into two phases. A first phase may not require precise closed-loop control, and a second phase requires precise and closed-loop control. In an initial state, the movable member 320 may not be in contact with the driven member 330, but is held in the initial state by a pop-out and push-back mechanism. When precise control of the position of the movable member 320 is required, an external force provided by the pop-out and push-back mechanism may cause the movable member 320 to engage with the driven member 330. When precise control is not required, the movable member 320 may be separated from the driven member 330 by the mechanism.

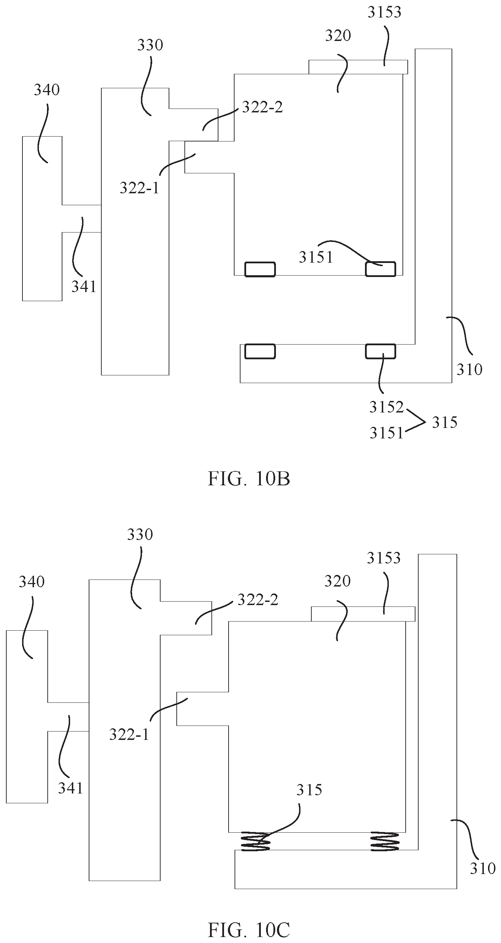

As shown in FIG. 10A and FIG. 10B, the pop-out and push-back mechanism may include a first magnetic attraction assembly and a locking component 3153. The locking component 3153 may be, for example, a stop block or a stop lever, and may move along the first direction relative to the fixed member 310 via a guide structure. The locking component 3153 may limit a position that is of the movable member 310 and that is between the first position and the second position, and the locking component 3153 may remain stationary relative to the movable member 310.

The locking component 3153 may move from a third position (a position in FIG. 10A) to a fourth position (a position in FIG. 10B), and the first magnetic attraction assembly may be configured to provide power for the movable member 320 to move along the first direction (move from a first position in FIG. 10A to a second position in FIG. 10B), so that surfaces that are of the first limiting portion 322-1 and the second limiting portion 322-1 and that are opposite to each other change from a separated state to a contact state. In an embodiment, the first magnetic attraction assembly may include at least one pair of magnetic attraction members (3151 and 3152) disposed on the movable member 320 and the fixed member 310. In an initial state, the locking component 3153 is at the third position, the movable member 310 is at the first position, and the locking component 3153 may press against the movable member 320, as shown in FIG. 10A. The limiting portion 322-1 of the movable member 320 and the limiting portion 322-2 of the driven member 330 are separated. When precise control of the movement of the movable member 320 is required, the locking component 3153 may be controlled, so that the locking component 3153 moves upward to the fourth position. As a result, the movable member 320 may be pushed upward by a repulsive force between the magnetic attraction members until the limiting portion 322-1 of the movable member 320 is in contact with the limiting portion 322-1 of the driven member 330 (in this case, the movable member is at the second position), as shown in FIG. 10B. When the driven member 330 subsequently drives the movable member 320 to move, the locking component 3153 may be controlled to retract to a position that does not obstruct further movement of the movable member 310, for example, retract to an interior of the fixed member 310, or may move upward to a limit of movement of the movable member 320. When the drive module is no longer used, the locking component 3153 may move downward, so that the limiting portion of the movable member 320 is separated from the limiting portion of the driven member 330, and the locking component 3153 and the movable member 320 return to the initial positions.

In another embodiment, the pop-out and push-back mechanism may include only the first magnetic attraction assembly, and the first magnetic attraction assembly may be an electromagnet. A polarity of the magnet may be controlled by controlling a current direction of the magnet, so that there is a repulsive force between the movable member 320 and the fixed member 310, so that the movable member 320 is pushed to the movable member 320 along the movement direction to engage with the driven member 330, as shown in FIG. 10B. The limiting portions between the driven member 330 and the movable member 320 may be in contact with each other during the engagement. If the movable member 320 needs to be separated from the driven member 330, an additional mechanism may be disposed to perform a corresponding operation, or an attractive force may be generated between the magnets, and the attractive force is large, so that the movable member 320 is in contact with the fixed member 310.

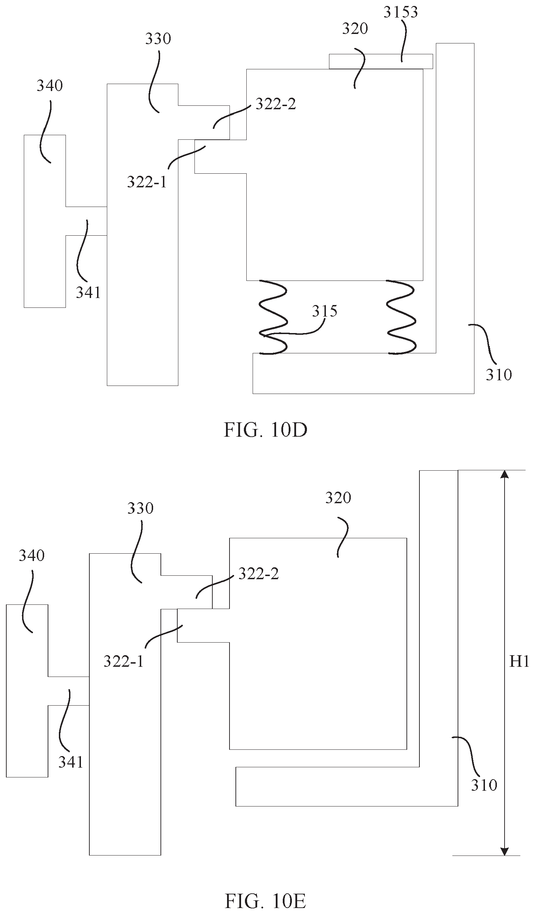

As shown in FIG. 10C and FIG. 10D, the pop-out and push-back mechanism may further include a first elastic component 315 and the locking component 3153. The first elastic component 315 may be, for example, a pop-out leaf spring or a spring. In an initial state, the first elastic component 315 may be pre-compressed. For example, the locking component 3153 is used to keep the first elastic component 315 in a preloaded and compressed state. When precise control of the movement of the movable member 320 is required, the locking component 3153 may be controlled to move the locking component upward, so that the first elastic component 315 is popped out, thereby pushing the movable member 320 to the driven member 330 for engagement. When precise control of the movement of the movable member 320 is not required, for example, the locking component may be moved down again, to press the movable member 320 back to the initial position. In this way, when the movable member 320 does not need to be used, the movable member 320 may be separated from the driven member 330, thereby reducing impact on movement of another component.

The first elastic component 315 may be fastened only at one end. For example, only one end of the first elastic component 315 is fastened to the movable member 320 in FIG. 10C. An end that is of the first elastic component 315 and that is close to the fixed member 315 may be a free end, but the free end abuts tightly against an end surface of the fixed member 310 in a compressed state. After the first elastic component 315 is released, causing the two surfaces of the movable member and the driven member to be in contact, the first elastic component 315 may return to a free length, thereby avoiding impact on the movement of the movable member 320 driven by the driven member 330.

FIG. 10E is a diagram of an initial state present when the pop-out and push-back mechanism is not used. In the initial state, the driven member 330 also needs to be in contact with the movable member via a transmission structure. Due to a constraint of a guide structure of the driven member 330, a height of the driven member causes a height H1 of the drive module in the initial state to be greater than a height H shown in FIG. 10A.

According to the embodiment shown in FIG. 10A to FIG. 10E, a size of the entire module can be reduced when the drive module is not used, so that a device in which the drive module is used is more portable. For example, when the drive module is used in a camera module of an electronic device, the pop-out and push-back mechanism releases the movable member 320 only when a user opens a photographing application, allowing the movable member to engage with the driven member via limiting portions. When the user does not use the photographing application, the two limiting portions are separated, thereby reducing an overall size of the electronic device and making the electronic device more portable.

The foregoing describes the technical solutions in embodiments of this application by using an example in which both the X-axis and the first direction are the optical axis direction. In some embodiments, the first direction may alternatively be a direction perpendicular to the optical axis, to implement an optical image stabilization effect. For structures of the preload member, the driven member, the harmonic oscillator, the movable member, and the fixed member, and connection relationships of different components, refer to embodiments in which the first direction is the optical axis direction. Details are not described herein again.

An embodiment of this application further provides a camera assembly, including the drive module described above, a lens assembly, and an image sensor.

An embodiment of this application further provides an electronic device, including the drive module described above or the foregoing camera assembly.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A drive module, comprising: a fixed member (310), a movable member (320), a harmonic oscillator (340), and a driven member (330), wherein
the fixed member (310) comprises a first mounting hole (311);
the movable member (320) is configured to carry an optical element and is disposed in the first mounting hole (311);
the harmonic oscillator (340) is configured to drive the driven member (330) to reciprocate along a first direction relative to the fixed member (310); and
when the driven member (330) reciprocates along the first direction relative to the fixed member (310), the driven member (330) transmits movement of the driven member (330) along the first direction to the movable member (320) via a transmission structure (322), to drive the movable member (320) to reciprocate along the first direction.

2. The drive module according to claim 1, wherein
the transmission structure (322) comprises a first limiting portion (322-1) and a second limiting portion (322-2) that are sequentially disposed along the first direction, the first limiting portion (322-1) is disposed on the movable member (320), the second limiting portion (322-2) is disposed on the driven member (330), the first limiting portion (322-1) and the second limiting portion (322-2) respectively comprise a first surface and a second surface that are opposite to each other, a magnetic attraction force exists between the first limiting portion (322-1) and the second limiting portion (322-2), and when the driven member (330) drives the movable member (320) to reciprocate along the first direction, the first surface and the second surface are in contact with each other.

3. The drive module according to claim 2, wherein
the movable member (320) is configured to move from a first position to a second position along the first direction under an action of a pop-out and push-back mechanism, so that the first surface of the first limiting portion (322-1) and the second surface of the second limiting portion (322-2) change from a separated state to a contact state, thereby enabling the transmission structure (322) to transmit the movement of the driven member along the first direction to the movable member (320); or
the movable member (320) is configured to move from a second position to a first position along the first direction under an action of a pop-out and push-back mechanism, so that the first surface of the first limiting portion (322-1) and the second surface of the second limiting portion (322-2) change from a contact state to a separated state, thereby preventing the transmission structure (322) from transmitting the movement of the driven member (330) along the first direction to the movable member.

4. The drive module according to claim 3, wherein the pop-out and push-back mechanism comprises a locking component (3153) and a pop-out component (315), the locking component (3153) is in contact with the movable member (320), and the pop-out component (315) comprises a first magnetic attraction assembly (3151, 3152) or a first elastic component; and
the locking component (3153) is configured to move from a third position to a fourth position along the first direction, so that the movable member (320) can move from the first position to the second position under an action of the pop-out component (315); or the locking component (3153) is configured to move from a fourth position to a third position along the first direction, so that the movable member (320) can move from the second position to the first position along the first direction under an action of the pop-out component (315).

5. The drive module according to any one of claims 1 to 4, wherein the drive module further comprises a preload member (350), the preload member (350) is configured to provide a preload force to the harmonic oscillator (340), and the harmonic oscillator (340) is configured to drive, under an action of the preload force, the driven member (330) to reciprocate along the first direction.

6. The drive module according to any one of claims 1 to 5, wherein
the movable member (320) reciprocates along the first direction via a first guide structure; and the first guide structure comprises a first guide shaft (3211-1) and a first groove (3211-2) that mates with the first guide shaft (3211-1), and the first guide shaft (3211-1) and the first groove (3211-2) are respectively disposed on the fixed member (310) and the movable member (320) and extend along the first direction.

7. The drive module according to claim 6, wherein
the first guide structure comprises a second guide shaft (3212-1) and a guide portion (3212-2), and the second guide shaft (3212-1) and the guide portion (3212-2) are respectively disposed on the fixed member (310) and the movable member (320) and extend along the first direction.

8. The drive module according to claim 6 or 7, wherein the drive module comprises a second magnetic attraction assembly, and the second magnetic attraction assembly is configured to abut the first guide shaft (3211-1) against the first groove (3211-2).

9. The drive module according to any one of claims 1 to 8, wherein the driven member (330) reciprocates along the first direction via a second guide structure, the second guide structure comprises a first groove body (3311-1) provided on the driven member (330), a second groove body (3311-2) provided on the fixed member (310), and a sliding connector, the first groove body (3311-1) and the second groove body (3311-2) are provided opposite to each other and form an accommodation groove for accommodating the sliding connector, and the accommodation groove extends along the first direction.

10. The drive module according to claim 9, wherein the sliding connector is a ball.

11. The drive module according to any one of claims 1 to 10, wherein the drive module further comprises a friction member, the harmonic oscillator (340) is a stationary member, the friction member is a moving member, and when the harmonic oscillator (340) vibrates, the driven member (330) is driven, via a friction force between the harmonic oscillator (340) and the friction member, to reciprocate along the first direction.

12. The drive module according to claim 5, wherein the harmonic oscillator (340) is a stationary member, the harmonic oscillator (340) is fastened to the fixed member (310) via the preload member (350), and the harmonic oscillator (340) is configured to drive, via a friction force between the harmonic oscillator (340) and the driven member (330), the driven member (330) to reciprocate along the first direction.

13. The drive module according to any one of claims 1 to 10, wherein the drive module further comprises a friction member, the harmonic oscillator (340) is a moving member, the friction member is fastened to the fixed member (310), and when the harmonic oscillator (340) vibrates, the harmonic oscillator (340) and the driven member (330) are driven, via a friction force between the harmonic oscillator (340) and the friction member, to reciprocate along the first direction.

14. The drive module according to claim 13, wherein the friction member is fastened to the fixed member (310), and the harmonic oscillator (340) is fastened to the driven member (330).

15. The drive module according to claim 1, wherein the transmission structure (322) comprises a third limiting portion (322-3), a fourth limiting portion (322-4), a fifth limiting portion (322-5), and a second elastic component (322-6), the third limiting portion (322-3) and the fourth limiting portion (322-4) are disposed on the movable member (320), the fifth limiting portion (322-5) is disposed on the driven member (330), the fifth limiting portion (322-5) is located between the third limiting portion (322-3) and the fourth limiting portion (322-4) along the first direction, the third limiting portion (322-3) and the fifth limiting portion (322-5) respectively comprise a third surface and a fourth surface that are disposed opposite to each other, and the second elastic component (322-6) is disposed between the fifth limiting portion (322-5) and the fourth limiting portion (322-4).

16. The drive module according to claim 1, wherein the transmission structure (322) comprises a third limiting portion (322-3), a fourth limiting portion (322-4), and a fifth limiting portion (322-5), the third limiting portion (322-3) and the fourth limiting portion (322-4) are disposed on the movable member (320), the fifth limiting portion (322-5) is disposed on the driven member (330), the fifth limiting portion (322-5) is located between the third limiting portion (322-3) and the fourth limiting portion (322-4) along the first direction, and the fifth limiting portion (322-5) abuts against both the third limiting portion (322-3) and the fourth limiting portion (322-4).

17. The drive module according to claim 1, wherein the transmission structure (322) comprises a third limiting portion (322-3), a fourth limiting portion (322-4), a fifth limiting portion (322-5), and a ball (322-7), the third limiting portion (322-3) and the fourth limiting portion (322-4) are disposed on the movable member (320), the fifth limiting portion (322-5) is disposed on the driven member (330), the fifth limiting portion (322-5) is located between the third limiting portion (322-3) and the fourth limiting portion (322-4) along the first direction, the third limiting portion (322-3) and the fifth limiting portion (322-5) respectively comprise a third surface and a fourth surface that are disposed opposite to each other, and the ball (322-7) is disposed between the fifth limiting portion (322-5) and the fourth limiting portion (322-4).

18. The drive module according to any one of claims 1 to 17, wherein the optical element comprises a lens, or the optical element comprises a lens and an aperture stop.

19. The drive module according to any one of claims 1 to 18, wherein the first direction is an axial direction of the first mounting hole (311).

20. A camera module, comprising an optical element and the drive module according to any one of claims 1 to 19, wherein the movable member (320) is configured to carry the optical element.

21. An electronic device, comprising the drive module according to any one of claims 1 to 19 or the camera module according to claim 20.
